# FASCICULE DE BREVET EUROPEEN

(11) **EP 2 225 819 B1**
(45) Date de publication et mention de la délivrance du brevet: **04.03.2015**
(21) Numéro de dépôt: 08865179.9
(22) Date de dépôt: 18.12.2008
(51) Int. Cl.: H02K 11/00, H02K 29/06, H02K 9/06

(54) **Machine électrique tournante avec un porte-cible monté sur un ventilateur**
Elektrische Drehmaschine mit einer Scheibenträgeranordnung auf dem Ventilator montiert
Rotary electric machine with a target carrier mounted on the fan

(30) Priorité: 19.12.2007 FR 0759989
(43) Date de publication de la demande: 08.09.2010
(73) Titulaire: Valeo Equipements Electriques Moteur, 94046 Créteil Cedex (FR)
(72) Inventeur: LEROY, Virginie, F-93360 Neuilly Plaisance (FR)
(74) Mandataire: de Lambilly Delorme, Marie Pierre
(86) Numéro de dépôt international: PCT/FR2008/052352
(87) Numéro de publication internationale: WO 2009/081047

(56) Documents cités:
- EP-A- 0 601 228
- EP-A- 1 388 924
- WO-A-01/69762
- WO-A-2007/054186
- DE-A1- 10 243 273
- DE-U1- 29 514 026
- JP-A- 63 225 123

## Description

### DOMAINE TECHNIQUE DE L'INVENTION

L'invention se rapporte à une machine électrique tournante.

L'invention se rapporte plus particulièrement à une machine électrique tournante, telle qu'un alterno-démarreur notamment pour un véhicule automobile, qui comporte :
- un carter ;
- un rotor monté rotatif dans le carter ;
- au moins un ventilateur solidaire du rotor;
- un porte-cible distinct et solidaire du ventilateur ;
- une cible portée par le porte-cible ;
- au moins un capteur porté par le carter et associé à la cible pour déterminer la position angulaire du rotor,

### ETAT DE LA TECHNIQUE

Les machines électriques tournantes comportent principalement un rotor qui est monté tournant à l'intérieur d'un stator bobiné associé. Le stator est agencé dans un carter fixe en étant solidaire de celui-ci. Le rotor est solidaire en rotation d'un arbre monté rotatif dans le carter fixe.

Des machines de ce type sont connues de l'état de la technique, et notamment de la demande de brevet WO-A-01/69.762conforme au préambule de la revendication 1. Dans ce document, la machine électrique tournante est un alternateur réversible, appelé alterno-démarreur, qui est apte à être utilisé dans un véhicule automobile à moteur thermique, d'une part, comme générateur électrique, et, d'autre part, comme moteur électrique notamment pour le démarrage du moteur thermique du véhicule.

Cette machine électrique tournante est équipée de moyens de suivi de la position angulaire de son rotor. Ces moyens de suivi permettent de déterminer la position angulaire du rotor par rapport au carter et donc par rapport au stator pour notamment injecter du courant dans le stator bobiné au bon moment lorsque la machine électrique tournante fonctionne en mode moteur électrique. Ces moyens comportent au moins un capteur et au moins une cible montée sur le porte-cible, qui est lié en rotation au rotor ou à un ventilateur fixé sur le rotor. Le porte-cible est traversé par l'arbre. La cible comporte par exemple un élément magnétique périphérique porté par une jante que comporte le porte-cible de forme annulaire.

Le porte-cible est dans un mode de réalisation liée en rotation au rotor par coopération de formes via le ventilateur. Ce porte-cible comporte un fond que l'on peut coller sur le rotor.

Une telle conception est tributaire de la forme du collecteur à bagues collectrice que comporte l'alterno-démarreur.

Ce collecteur équipe également un alternateur classique.

En variante, le porte-cible est réalisé venu de matière avec le ventilateur.

Le document FR-A-2.857.171 propose également une conception dans laquelle le porte-cible est réalisé venu de matière avec le ventilateur. Dans ce document le ventilateur comporte un insert métallique fixé sur le rotor et un ensemble flasque - pales en matière plastique surmoulé sur l'insert. La cible est en forme de couronne surmoulée sur le flasque. La cible consiste dans un mode de réalisation en un plasto-aimant, c'est dire en un matériau plastique chargé de particules magnétiques comme des ferrites ou des terres rares.

En variante la cible est collée.

Une telle conception nécessite de réaliser le ventilateur, puis de fixer la cible sur le ventilateur. Ceci entraîne de nombreux déplacements des ventilateurs lorsque la chaîne de production est dispersée géographiquement, notamment lorsque les cibles ne peuvent pas être fixées sur les ventilateurs à proximité de la chaîne de production des ventilateurs.

Dans le document WO 2007/054186 le ventilateur est solidaire de l'arbre du rotor et un disque, formant cible, est fixée par emboîtement sur des pions solidaires l'extrémité libre des pales du ventilateur.

Une telle solution nécessite de réaliser des pions à la périphérie externe des pales ce qui complique la réalisation de celles-ci et conduit à une augmentation d'épaisseur de celles-ci.

En outre cette solution nécessite de doter le ventilateur d'un moyeu pour son montage sur l'arbre du rotor ce qui entraîne une augmentation de la longueur axiale de la machine électrique tournante. Il en est de même dans le document DE 295 14026.

Dans le document DE 102 43 273 le ventilateur est solidaire du rotor et la cible comporte un disque fixé de manière non décrite sur au moins une pale du ventilateur.

### RESUME DE L'INVENTION

Pour remédier notamment à ces problèmes, la présente invention propose une machine électrique tournante selon la revendication 1.

Selon d'autres caractéristiques de l'invention prises isolément ou en combinaison:
- la machine comporte des moyens pour centrer le porte-cible de manière coaxiale par rapport au ventilateur ;
- le porte-cible est monté sur le ventilateur par emboîtement axial des premiers moyens de fixation avec les seconds moyens de fixation ;
- le centrage du porte-cible est réalisé par les premiers et deuxièmes moyens de fixation ;
- le premier élément est le porte-cible ;
- le deuxième élément est le ventilateur ;
- les premiers moyens de fixation comportent au moins un ergot qui s'étend axialement vers l'avant depuis le porte-cible et présente à l'avant une tête en forme de crochet tourné radialement vers l'extérieur et qui est susceptible d'être déformé élastiquement radialement vers l'intérieur pour le montage du porte-cible en accrochant un bord d'accrochage radialement extérieur d'un orifice associé du ventilateur formant les deuxièmes moyens de fixation ;
- le porte-cible est centré sur le ventilateur par contact radial entre l'ergot et le bord d'accrochage de l'orifice associé ;
- le bord d'accrochage est formé par une portion d'un alésage central du ventilateur;
- les premiers moyens de fixation du porte-cible comportent au moins une pince comportant une encoche axiale qui débouche axialement vers l'avant ou l'arrière, et qui est délimitée par deux parois latérales en vis-à-vis qui sont susceptibles d'être écartées élastiquement l'une de l'autre pour recevoir axialement un doigt de fixation appartenant aux deuxièmes moyens de fixation, le doigt de fixation étant bloqué axialement dans la pince lorsque les parois son rappelées élastiquement l'une vers l'autre ;
- le doigt de fixation appartient au ventilateur et s'étend radialement vers l'intérieur depuis un alésage central du ventilateur ;
- le doigt de fixation du ventilateur s'étend radialement vers l'intérieur depuis un alésage central du ventilateur arrière ;
- le porte-cible est centré sur le ventilateur par contact radial entre une face radialement extérieure de la pince et le bord de l'alésage intérieur du ventilateur arrière ;
- les premiers moyens de fixation du porte-cible sont réalisés en matériau plastique ;
- le porte-cible comporte un voile métallique sur lequel les premiers moyens de fixation en plastique sont surmoulés ;
- le premier élément comporte une bague d'orientation axiale ;
- les premiers moyens de fixation sont solidaires de la bague, qui est en matériau plastique ;
- le porte-cible comporte une pluralité de premiers moyens de fixation qui sont répartis régulièrement sur le pourtour du porte-cible.

### DESCRIPTION DES FIGURES

D'autres caractéristiques et avantages apparaîtront au cours de la lecture de la description détaillée qui va suivre pour la compréhension de laquelle on se reportera aux dessins annexés parmi lesquels :
- la figure 1 est une vue en coupe axiale qui représente une machine électrique tournante réalisée selon les enseignements de l'invention ;
- la figure 2 est une vue partielle en coupe, qui représente à plus grande échelle une partie du porte-cible de la figure 1 réalisé selon un premier mode de réalisation de l'invention ;
- la figure 3 est une vue de face qui représente le ventilateur réalisé selon le premier mode de réalisation de l'invention ;
- la figure 4 est une vue partielle de la cavité de la figure 2 délimitée par la périphérie interne du ventilateur et par le chambrage de la roue polaire arrière ;
- la figure 5 est une vue en coupe selon la ligne 5-5 de la figure 3 ;
- la figure 6 est une vue similaire à celle de la figure 2 qui représente le porte-cible réalisé selon un deuxième mode de réalisation de l'invention ;
- la figure 7 est une vue de face qui représente le ventilateur arrière réalisé selon le deuxième mode de réalisation de l'invention.

### DESCRIPTION DETAILLEE DES DIVERS MODES DE REALISATION

Dans la suite de la description, des éléments ayant des fonctions identiques, analogues ou similaires seront désignés par des mêmes numéros de référence.

Afin de faciliter la compréhension de la description et des revendications, on utilisera, à titre non limitatif, une orientation axiale dirigée d'arrière en avant qui est indiquée par la flèche "A" des figures et qui est parallèle à l'axe de rotation "B" de l'arbre central 12, et une orientation radiale dirigée de l'intérieur vers l'extérieur depuis l'axe de rotation "B" de l'arbre central 12 perpendiculairement à l'orientation axiale "A", et qui est indiquée par la flèche "R".

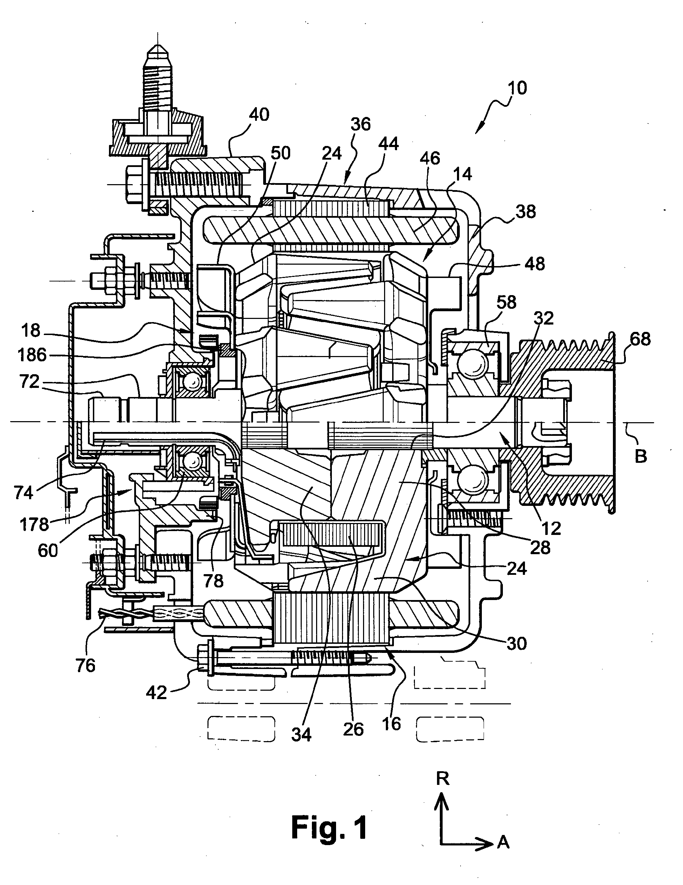

On a représenté à la figure 1 une machine électrique tournante 10 sous la forme d'un alternateur pour véhicule automobile fonctionnant de manière réversible. Un tel alternateur est appelé alterno-démarreur et comprend un arbre rotatif 12, un rotor 14 solidaire en rotation de l'arbre 12, un stator fixe bobiné du type polyphasé 16, entourant le rotor 14, et des moyens 18, dits moyens de suivi, pour déterminer la position angulaire du rotor 14 afin notamment d'injecter du courant dans le stator bobiné au bon moment.

Cette figure 1 correspond au mode de réalisation de la figure 8 du document WO 01/69762, dans lequel on a remplacé les moyens de suivi par les moyens de suivi 18 selon l'invention en sorte que la structure de la machine est conservée.

Dans cette figure 1 l'arbre central 12 est monté rotatif autour de son axe "B". L'axe "B" définit l'axe de rotation de la machine électrique tournante 10, ici du type polyphasé.

Le rotor 14 est solidaire en rotation de l'arbre 12 et forme avec celui-ci un ensemble rotorique tournant.

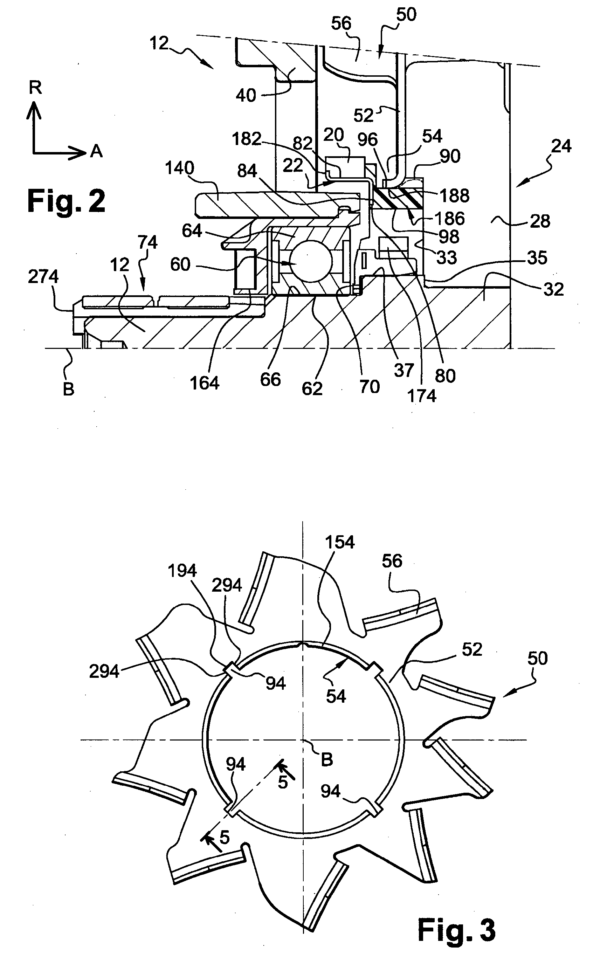

Comme mieux représenté à la figure 2, les moyens 18 de suivi pour déterminer la position angulaire du rotor 14 comportent une cible 20 portée par un porte-cible 22. Dans l'exemple représenté aux figures, la cible 20 est du type magnétique et est donc formée par un élément émettant un champ magnétique. Ces moyens 18 seront décrits plus en détail par la suite.

Le rotor 14 est un rotor à griffes, qui comprend deux roues polaires 24 à griffes et un bobinage d'excitation 26 agencé axialement entre les roues polaires 24. Chaque roue polaire 24 comporte un flasque 28 s'étendant radialement autour de l'arbre 12 et portant à sa périphérie extérieure des griffes 30.

Les griffes 30 comprennent des saillies radiales prolongées à leur périphérie externe par des dents d'orientation axiale dirigées vers le flasque 28 de l'autre roue polaire 24. Les saillies radiales s'étendent à la périphérie externe du flasque 28.

Chaque dent d'une griffe 30 présente une forme trapézoïdale. Les griffes 30 d'une roue polaire 24 sont imbriquées circonférentiellement entre les griffes 30 de l'autre roue polaire 24. Un entrefer existe entre la périphérie externe du rotor 14, constituée par la périphérie externe des dents des griffes 30, et la périphérie interne du stator 16

Les flasques 28 sont percés chacun d'un alésage central de passage de l'arbre 12. Les flasques 28 sont solidarisés en rotation à l'arbre central 12 par emmanchement à force de tronçons 32 striés axialement de l'arbre 12 dans l'alésage central des flasques 28 des roues polaires 24.

Pour permettre un positionnement axial précis du rotor 14 sur l'arbre 12, une face 33 radiale d'extrémité arrière du flasque 28 de la roue polaire 24 arrière est agencée en butée axiale contre une première face radiale d'épaulement 35 de l'arbre 12. La face d'épaulement 35 est plus particulièrement portée par un tronçon intermédiaire 37 de l'arbre 12 présentant un diamètre supérieur au diamètre du tronçon strié 32 adjacent. Le tronçon intermédiaire 37 forme plus particulièrement un collet 37 comme cela est représenté plus en détail à la figure 2.

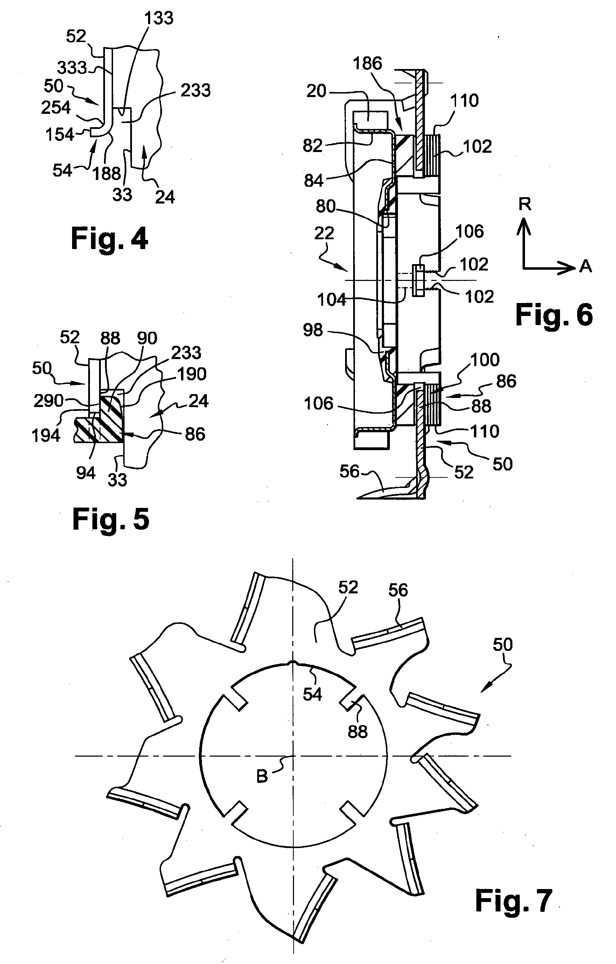

La face 33 appartient à un dégagement 233 de matière (figure 4) que présente la roue polaire arrière 24 du rotor 14 à sa périphérie interne. Le dégagement 233 est ici en forme de chambrage cylindrique.

Suivant une caractéristique, l'invention tire partie de ce chambrage 233 interne du rotor 14 délimité par la face radiale 33 et par une face d'orientation axiale 133 se raccordant à la face d'extrémité radiale 333 de roue polaire arrière 24..

Un noyau 34, réalisé par exemple en fer doux, est interposé axialement entre les flasques 28 des roues polaires 24. Le bobinage de rotor 26 est agencé autour du noyau 34. Le noyau 34 est ici réalisé eh deux tronçons qui sont chacun réalisés venus de matière avec le flasque 28 d'une roue polaire 24 associée.

Lorsque le bobinage 26 du rotor 14, formant un bobinage d'excitation, est alimenté électriquement, les griffes de l'une des roues 24 définissent des pôles magnétiques "Nord", tandis que les griffes de l'autre roue polaire 24 définissent des pôles magnétiques "Sud".

Le stator 16 est porté par un carter 36 fixe qui renferme le stator 16 et le rotor 14. Le carter 36 comprend au moins deux flasques 38,40 appelées respectivement paliers avant et arrière 38 et 40, qui sont refermés l'un sur l'autre et fixés l'un avec l'autre ici avec des tirants dont l'un est visible et est référencé en 42 à la figure 1.

Le stator 16 comporte un corps de stator 44 annulaire coaxial à l'arbre 12 et portant un jeu de bobinages statoriques 46.

Le corps de stator 44 du stator 16 est solidaire du carter 36 fixe et est porté intérieurement par celui-ci. Ici par simplicité les paliers 38, 40 n'ont pas été représentés en coupe mais en section.

De manière connue, le corps de stator 44 est réalisé en un paquet de tôles empilées axialement dans lequel sont ménagées une série d'encoches axiales contenant des enroulements des bobinages statoriques 46 à raison d'au moins un enroulement par phase que comporte l'alterno-démarreur, ici du type triphasé, en variante du type hexaphasé ou septaphasé.

Les enroulements peuvent être du type à bobines séparées, à bobines enchevêtrées ou du type à barres par exemple en forme de "U" comme décrit dans le document WO-A-92/06.527.

Les paliers 38 et 40 de forme creuse sont ajourés pour la circulation de l'air à l'intérieur de la machine électrique tournante 10 du type compact et à ventilation interne. Pour plus de précisions sur la forme des ouvertures des paliers 38, 40 on se reportera par exemple au document WO 01/69762 précité. A la figure 2 on voit l'une des ouvertures d'entrée d'air circonférentiellement de forme oblongue.

Le rotor 14 porte ici à chacune de ses extrémités axiales respectivement un ventilateur avant 48 et arrière 50 coaxiaux à l'arbre 12. Les ventilateurs 48, 50 sont ici du type centrifuge.

Le ventilateur arrière 50 est plus puissant que le ventilateur avant 48. En variante seul le ventilateur arrière 50 est prévu.

Les ventilateurs 48, 50 sont de forme annulaire et comportent un flasque 52 central équipé à sa périphérie extérieure de pales 56. Le flasque 52 est ajouré en son centre d'un alésage intérieur 54 de passage de l'arbre 12.

Les flasques 52 des ventilateurs 48, 50 sont ici métalliques pour mieux évacuer la chaleur et sont fixés aux roues polaires 24 du rotor 14, par exemple par des points de soudage, en variante par sertissage ou vissage. Les ventilateurs 48, 50 sont ainsi solidaires en rotation de l'arbre 12.

Le flasque 52 est par exemple réalisé en tôle métallique et est en appui sur la face d'extrémité radiale 333 de la roue polaire arrière 24.

Les pales 56 sont ici métalliques. Par rapport à la solution du document WO 01/69762 on conserve en majeure partie le ventilateur, seule la périphérie interne de celui-ci étant aménagée.

Comme mieux visible à la figure 4, la périphérie interne du ventilateur 50 ferme partiellement le dégagement 233. L'alésage intérieur 54 du ventilateur 50 est délimité par un rebord annulaire d'orientation axiale 154 prolongé par une portion courbe 254 raccordant le rebord 154 à la périphérie interne du flasque 52 d'orientation radiale. Le rebord 154 et la portion 254 forment une collerette annulaire. La collerette 154, 254 et la périphérie interne du flasque 52 ferment la périphérie externe du dégagement 233.

L'invention tire partie, de manière décrite ci-après, de la face intérieure 188 de la collerette 154, 254 et de la face avant 88 du flasque 52.

Chaque palier 38, 40, ici en aluminium, du carter 36 fixe comporte centralement un logement pour un palier de roulement, qui est ici formé par un roulement à billes 58, 60, pour le montage rotatif de l'arbre 12 du rotor 14.

Ces roulements avant 58 et arrière 60 supportent respectivement un tronçon d'extrémité avant et un tronçon d'extrémité arrière de l'arbre 12 et sont ici à une seule rangée de billes implantées entre une bague intérieure 62 tournante et une bague extérieure 64 fixe par rapport au logement associé du carter 36.

Cette bague 64 est monté dans une cage en matière plastique 164 intercalée radialement entre une douille 140 appartenant au palier arrière 40 et la bague 64. La douille 140 définie avec l'arbre 12 le logement du roulement 60. La cage 164 est fixée par encliquetage sur la douille 140 et permet d'absorber les phénomènes de dilatation.

Le rebord interne 154 du ventilateur 50 est dirigé vers le roulement 60, c'est-à-dire en direction opposée au rotor 24.

Comme représenté à la figure 2, la bague intérieure 62 du roulement à billes arrière 60 est montée serrée sur un tronçon de l'arbre 12 formant portée de roulement 66.

La portée de roulement 66 est agencée en arrière du collet 37. Elle présente un diamètre inférieur à celui du collet 37. Ainsi, la portée de roulement 66 est délimitée vers l'avant par une deuxième face radiale d'épaulement 70 du collet 37.

L'arbre 12 se prolonge au-delà du palier avant 38, pour porter un organe de transmission de mouvement 68 sous la forme d'une poulie fixée, ici à l'aide d'un écrou non référencé, sur l'arbre 12 à l'extérieur dudit palier 38. Cette poulie 68, solidaire en rotation de l'arbre 12, est destinée à coopérer avec une courroie à rainures en "V" (non représentée) par laquelle le moteur thermique du véhicule automobile entraîne l'arbre 12 et l'ensemble du rotor 14 lorsque la machine électrique tournante 10 fonctionne en mode générateur.

Inversement, cette poulie 68 et la courroie qui lui est associée permettent aussi à la machine électrique tournante 10 d'entraîner le moteur thermique du véhicule, lorsque ladite machine électrique tournante 10 fonctionne en mode moteur électrique, notamment en mode démarreur.

La transmission de mouvement entre l'arbre 12 et le moteur thermique du véhicule en variante peut comporter des engrenages, au moins une chaîne des poulies à écartement variable et/ou au moins une courroie. Ainsi l'organe de transmission de mouvement 68 peut avoir de nombreuses configurations et consister en un engrenage, en une roue dentée, en une poulie, etc.

Les deux extrémités du bobinage d'excitation 26 sont reliées chacune par une liaison filaire, dont l'une (non référencée) est visible à la figure 1, à un collecteur 74 rapporté doté de bagues collectrices 72 portées par l'extrémité arrière de l'arbre 12 à l'extérieur du carter 36.

Pour ce faire l'extrémité arrière de l'arbre 12 est de plus petite taille que l'extrémité avant de l'arbre 12 et la roue polaire arrière 24 présente un passage radial pour chaque liaison filaire, L'un de ces passages (non référencé) est visible à la figure 1.

Le collecteur 74 est par exemple celui qui est décrit plus en détail dans le document FR-A-2.710.199 auquel on se reportera. Ce collecteur 74 présente donc à l'avant un anneau 174 implanté axialement entre le roulement 60 et la face 33. Cet anneau porte des pattes de liaison avec les liaisons filaires des extrémités du bobinage d'excitation 26 du rotor 14. L'une de ces pattes est visible de manière non référencée à la figure 1.

Les pattes et les deux liaisons filaires sont diamétralement opposées. Les liaisons filaires et les passages de la roue polaire 24 débouchent radialement en dessous de la cible non référencée à la figure 1.

L'anneau 174 est relié par des bras à une partie cylindrique en matière plastique 274, qui porte les bagues 72. La partie 274 est implantée axialement à l'arrière du roulement 60. Des languettes électriquement conductrices sont noyées dans les bras en matière plastique pour chacune relier une patte à une bague 72, ici en cuivre. Les languettes passent sous le roulement 60. Une des languettes (non référencée) est visible à la figure 1.

Les bobinages statoriques 46 sont quant à eux reliés par une liaison à câbles et connecteurs à un étage de puissance d'un dispositif électronique de gestion et de commande, non représenté, disposé à l'extérieur de la machine électrique tournante 10.

On voit à la figure 1 l'une des sorties 76 des bobinages statoriques 46. Cette sortie 76 traverse une ouverture réalisée dans le palier arrière 40.

En variante l'étage de puissance du module de gestion et de commande est porté par le palier arrière 40 de l'alterno-démarreur.

Ici la machine électrique tournante 10 est de manière précitée du type de celle décrite dans le document WO-A-01/69.762 auquel on se reportera. Le palier 40 arrière porte, du côté opposé au rotor 14, ainsi un porte-capteur (s) 178 réglable angulairement par rapport au palier arrière.40.

Le porte-capteur (s) porte au moins un capteur.

Ici le porte- capteurs 178 porte plusieurs capteurs et est du type de celui représenté à la figure 9 du document WO-A-01/69.762. Il comporte donc un secteur annulaire (non référencé à la figure 1) traversant une ouverture du fond du palier arrière 40. Ce porte-capteurs 178 est centré par l'extrémité arrière de la douille 140.

Le secteur est équipé ici de trois capteurs 78 montés à l'intérieur du palier arrière 40.

Les capteurs 78 sont donc montés, après réglage angulaire du porte-capteurs 178, fixes sur le palier arrière 40.

Les capteurs 78 sont ici des capteurs du type à effet Hall La cible 20, comprise dans les moyens 18 de détermination de la position angulaire du rotor 14, présente une forme annulaire entourant l'arbre 12 et elle est solidaire en rotation du ventilateur arrière 50 qui est lui-même solidaire du rotor 14 et donc entraîné en rotation par l'arbre 12. La cible 20 est formée par un anneau en matériau magnétique aimanté comportant une pluralité de pôles magnétiques Nord- Sud.

La cible 20, portée par le porte-cible 22, s'étend axialement et est centrée sur l'arbre 12. Elle est agencée d'un côté axial arrière du rotor 14. La structure et le montage du porte-cible 22 seront décrits plus en détails ci-après.

La cible 20 s'étend sensiblement autour de l'extrémité avant de la bague extérieure 64 du roulement à billes arrière 60, à l'intérieur du palier arrière 40 et du carter 36.

La cible 20 entoure l'extrémité avant de la douille 140.

La cible est à lecture radiale, un entrefer radial existant entre la périphérie interne de la portion du porte-capteurs 178, équipée des capteurs 78, apparents à cet endroit, et la périphérie externe de la cible 20.

Avantageusement, la cible 20 est réalisée en un élasto-aimant qui est vulcanisé, c'est-à-dire surmoulé, pour son positionnement sur la jante que comporte le porte-cible 22. Ainsi, l'élasto-aimant 20 adhère à la jante que comporte le porte-cible 22, ce qui assure sa fixation sur le porte-cible 22. L'élasto-aimant renforce la tenue mécanique de la jante et fait corps avec celle-ci

L'élasto-aimant comporte de l'élastomère dans lequel des particules magnétiques, telles que des particules d'oxyde de fer, des ferrites ou des terres rares, sont emprisonnées. Avantageusement, lors d'une étape préalable la jante du porte-cible est revêtue d'un primaire d'adhésion de manière à augmenter la force d'adhésion.

Les particules magnétiques sont dans un mode de réalisation magnétisées en final.

En variante la cible est un plasto-aimant, comme dans le document FR A 2 857 171 précité, collé sur la jante.

Dans tous les cas la cible est magnétique et a une forme annulaire.

Sous l'effet de la rotation de la cible 20 conjointement avec l'arbre 12, le champ magnétique reçu par chaque capteur varie. Ces capteurs sont reliés au dispositif électronique de gestion et de commande, et transmettent à celui-ci des signaux qui sont fonctions des champs magnétiques reçus, ce dispositif traitant lesdits signaux pour en déduire la position angulaire du rotor 14 par rapport au carter 36 et au stator 16.

Le dispositif électronique de gestion et de commande est du type décrit dans le document FR-A-2.745.444, et comprend un étage de puissance doté d'un onduleur, par exemple à transistors du type MOSFET, constituant un convertisseur transformant le courant alternatif produit par le stator 16 en courant continu, des moyens de commande recevant les informations des capteurs, et des moyens de régulation du courant d'excitation du bobinage de rotor 26. Ces moyens de régulation sont reliés électriquement à un dispositif porte-balais, non représenté, comprenant des balais en contact avec les bagues collectrices 72 portées par l'arbre 12.

Ce dispositif porte-balais et le porte-capteurs 178 sont protégés par un capot (non référencé à la figure 1) fixé à l'aide de goujons sur le fond du palier arrière 40.

Le porte-cible 22 est, selon une caractéristique, réalisé en une pièce distincte du ventilateur arrière 50. Ainsi, le ventilateur arrière 50 et le porte-cible 22 peuvent être fabriqués indépendamment l'un de l'autre.

Le ventilateur peut donc être standardisé et équiper un alternateur classique non réversible.

Comme visible à la figure 2, le porte-cible 22 est en forme de coupelle et comporte un voile 84 radial, qui est rapportée solidaire en rotation de l'arbre 12 de manière décrite ci-après.

Le porte-cible 22 s'étend radialement en entourant coaxialement l'arbre central rotatif 12.

Ce porte cible n'interfère pas avec le collecteur 74, plus précisément avec l'anneau 174 du collecteur 74.

D'une manière générale le porte-cible 22 est de préférence réalisé en un matériau non magnétique.

Le porte-cible 22 (figure 2) est plus particulièrement conformé en un anneau radial qui entoure coaxialement l'arbre central 12 et qui est délimité intérieurement par un alésage intérieur 80, et extérieurement par une jupe 82 cylindrique de montage de la cible 20.

Le porte-cible 22 comporte ainsi un voile 84 radial et, à sa périphérie extérieure, la jupe 82 qui s'étend axialement vers l'arrière, c'est-à-dire en direction opposée au rotor. La face extérieure arrière de la jupe 82 comporte un rebord radial 182 pour caler axialement la cible 20 dans un sens axial. La jupe 82, équipée de son rebord 122, forme ainsi la jante précitée du porte-cible 22 sur laquelle la cible 20 est fixée.

Bien entendu lorsque la cible est un élasto-aimant on peut supprimer ce rebord 182.

Le voile 84 est implanté axialement entre la face avant de la douille 140 et la face arrière du rebord 154 du ventilateur 50.

Le diamètre de l'alésage 80 est compris entre le diamètre externe et le diamètre interne de la douille 140 et est donc supérieur au diamètre externe de l'anneau 174 du collecteur 74. Cet anneau 174 est décalé axialement en direction de la face 33 par rapport au voile 84 du porte-cible 22.

Le porte-cible 22 est monté solidaire en rotation de l'arbre central 12 axialement en arrière du rotor 14. A cet effet, le porte-cible 22 est fixé sur le ventilateur arrière 50 par des moyens de fixation qui seront décrits plus en détail par la suite.

Plus particulièrement, le ventilateur arrière 50 est interposé axialement entre le porte-cible 22 et le rotor 14.

Lorsque le porte-cible 22 est monté, la cible 20 s'étend radialement autour de l'extrémité avant de la douille 140 et de la bague extérieure 64 du roulement à billes arrière 60.

Le diamètre intérieur de la jupe cylindrique 82 d'orientation axiale du porte-cible 22 est supérieur au diamètre de l'alésage intérieur 54 du ventilateur arrière 50. Le diamètre de l'alésage intérieur 80 du porte-cible 22 est ici strictement compris entre le diamètre de l'alésage intérieur 54 du ventilateur arrière 50 et le diamètre extérieur du collet 37 de l'arbre 12.

Selon les enseignements de l'invention, le porte-cible 22 comporte des premiers moyens 86 de fixation par emboîtement élastique, qui sont destinés à être emboîtés élastiquement avec des deuxièmes moyens 88 de fixation de formes complémentaires portés par la périphérie interne du ventilateur arrière 50 pour la fixation du porte-cible 22 sur le ventilateur arrière 50 solidaire en rotation de la roue polaire arrière 24 du rotor 14 et donc de l'arbre 12

En outre, l'agencement comporte des moyens pour centrer le porte-cible 22 par rapport au ventilateur arrière 50 de manière à ce que le porte-cible 22 soit coaxial à l'arbre 12.

Ces moyens de centrage comprennent, dans le premier mode de réalisation des figures 2 à 5, la face interne 188 de l'alésage interne 54 du ventilateur 50, c'est-à-dire la face interne de la collerette 154, 254.

Le porte-cible 22 est destiné à être monté sur le ventilateur arrière 50 par emboîtement axial élastique d'arrière en avant des premiers moyens 86 de fixation avec les deuxièmes moyens 88 de fixation du ventilateur arrière 50.

Le porte-cible 22 comporte une bague 186 d'orientation axiale, qui s'étend en saillie axiale à partir du voile 84 vers le dégagement 233. L'extrémité axiale avant de la bague 186 pénètre dans le chambrage 233.

Suivant une caractéristique cette bague est en matière plastique.

L'extrémité axiale arrière de la bague 186 est fixée par surmoulage sur le voile 84. En variante elle est collée sur la face avant du voile 84.

Le diamètre intérieur de la bague 186 est supérieur au diamètre externe de l'anneau 174 du collecteur. Cet anneau 174 est implanté à l'intérieur de la bague 186.

La bague 186 entoure donc l'anneau 174 du collecteur 74 et n'interfère pas avec cet anneau.

Le diamètre externe de la bague 186 est inférieur au diamètre de la face axiale 133 du chambrage 233.

Selon un premier mode de réalisation de l'invention qui est représenté aux figures 2 à 5, les premiers moyens 86 de fixation comportent au moins un ergot 86, qui s'étend axialement vers l'avant depuis le voile 84 du porte-cible 22 et présente une tête 90 d'extrémité avant libre en forme de crochet tourné radialement vers l'extérieur. Ces premiers moyens 86 appartiennent à la bague 186 du porte-cible 22

L'ergot 86, d'orientation axiale, est saillant radialement par rapport au corps de la bague 186. Il présente, à son extrémité arrière, un pied enraciné dans l'extrémité axiale arrière de la bague 186. La tête 90 de l'ergot 86 constitue l'extrémité avant de l'ergot. Le pied et la tête 90 sont reliés par un corps d'orientation axiale, ici de section rectangulaire. La tête 90 est saillante radialement vers l'extérieur par rapport au corps de l'ergot.

La bague comporte une fente borgne débouchante à son extrémité avant pour obtention de l'ergot 86. Cette fente autorise un mouvement de flexion radial de l'ergot et est donc dimensionné en conséquence.

Le porte-cible 22 comporte ici une pluralité d'ergots 86, et donc de fentes borgnes, analogues qui sont agencés, régulièrement ou non, autour de la bague 186 du porte-cible 22.

Ici la répartition des ergots est régulière.

A chaque ergot il est associé ici deux fentes borgnes pour une obtention aisée des ergots.

Les ergots 86 sont susceptibles d'être déformés élastiquement radialement vers l'intérieur pour le montage du porte-cible 22 en accrochant chacun un bord d'accrochage 88 radialement extérieur d'un orifice 94 associé du flasque 52 du ventilateur arrière 50 formant les deuxièmes éléments de fixation.

Le bord d'accrochage 88 du ventilateur arrière 50 est avantageusement formé par une portion de l'alésage intérieur 54 du ventilateur arrière 50. Le bord 88 appartient à la face intérieure de l'alésage 54, plus précisément à la face avant de la périphérie interne du flasque 52. Cette face avant est d'orientation radiale.

Ici on tire partie du dégagement 233 que comporte la roue polaire 24 pour formation de la face 33 en contact avec le collet 37. L'ergot 86 est implanté en final entre la face 33 et la face avant du flasque 52 délimitant l'alésage 54.

Chaque ergot 86 présente une tête 90 formant un crochet. Chaque tête 90 comporte, comme visible à la figure 4, avantageusement une face d'extrémité avant 190 en forme de rampe inclinée vers l'intérieur en parcourant la tête 90 d'arrière en avant. La rampe permet ainsi de déformer automatiquement l'ergot 86 par contact avec la face arrière du bord supérieur 194 de l'orifice 94 lors du montage par déplacement axial d'arrière en avant du porte-cible 22 sur le ventilateur arrière 50.

Ainsi lors du montage la face 190 vient en contact avec a face arrière du bord supérieur 194 de l'orifice 94 en sorte que l'ergot 86 est déformé radialement vers l'intérieur en direction de l'axe B de l'arbre 12. Ensuite, après un mouvement axial correspondant à l'épaisseur du flasque 52, les ergots se déploient radialement vers l'extérieur en sorte que la face arrière 290 de la tête 90 l'ergot 86, formant un crochet, vient en prise avec la face avant 88 du flasque 52 constituant le bord d'accrochage 88. Cette face avant 88 est constituée par la face avant du bord supérieur 194 de l'orifice 94.

Les orifices 94 sont constitués ici (figure 3) par des crans 94 débouchant dans l'alésage 54 et délimités par deux bords radiaux parallèles 294 et par le bord supérieur 194. Ce bord 194 est dans un mode de réalisation chanfreiné pour faciliter la déformation radiale vers l'intérieur de l'ergot 86. Les bords 294 sont destinés à coopérer avec les bords latéraux du corps de l'ergot pour un blocage en rotation de la bague 186 par coopération de forme.

La dimension du cran 94 est fonction de celle du corps de section rectangulaire de l'ergot. Le nombre de crans 94 et d'ergots dépend des applications. Il est avantageusement prévu au moins deux ergots et deux crans complémentaires.

Dans cette forme de réalisation, comme représenté à la figure 3, la périphérie interne, et donc l'alésage intérieur 54, du ventilateur arrière 50 est avantageusement entaillé de crans 94, ici au nombre de quatre, qui sont agencés en coïncidence avec les ergots 86. Les ergots 86 de la bague 186 sont agencés dans les crans 94 en accrochant par leur face arrière 290 de leur tête 90 saillante radialement le bord d'accrochage 88 de l'alésage intérieur 54. Ce bord 88 appartient à la face avant du flasque et est constitué par la face avant du bord supérieur 194 du cran 94.

Les crans 94 permettent d'assurer que le porte-cible 22 est solidaire en rotation du ventilateur arrière 50. En effet, l'ergot 86 est bloqué en déplacement circonférentiel dans les deux sens par les bords radiaux des crans 94.

Bien entendu en variante on peut augmenter le nombre de crans tout en conservant le nombre d'ergots.

Dans ce cas les crans supplémentaires 94 servent au passage de saillies radiales supplémentaires issues de la bague.

Ces saillies servent alors à un blocage en rotation de la bague 186 par rapport au ventilateur 50 par coopération de formes avec les bords latéraux 294 des crans 94. Ainsi les ergots 86 sont ménagés. En outre ces saillies peuvent également servir à l'indexation angulaire de porte-cible par rapport au ventilateur.

Une face 96 radialement extérieure de la bague 186 est en contact radial, ici intime, avec la face interne 188 de l'alésage 54 lorsque le porte-cible 22 est fixé sur le ventilateur arrière 50 de manière à centrer le porte-cible 22 par rapport au ventilateur arrière 50 qui est lui-même coaxial à l'arbre 12.

Les moyens de centrage du porte-cible 22, par rapport au ventilateur arrière 50 et donc par rapport à l'arbre 12, comportent ainsi les faces 188 et 96.

Lorsque le porte-cible 22 est fixé au ventilateur arrière 50, les ergots 86 sont dans un état contraint de manière à appuyer radialement contre le bord d'accrochage 88 associé de l'alésage intérieur 54 du ventilateur arrière 50. Les réactions des forces élastiques radiales des ergots 86 contre le bord 194 s'équilibrent lorsque le porte-cible 22 est centré sur le ventilateur arrière 50.

Dans le mode de réalisation représenté la face d'extrémité avant de la tête 90 est dans le même plan que la face d'extrémité avant de la bague 186

Lorsque le rotor 14 est monté et lorsque le porte-cible 22 est fixé au ventilateur arrière 50, un faible jeu de montage existe entre la face d'extrémité avant de la bague 186 et la face radiale d'extrémité arrière 33 du chambrage 233 de la roue polaire 24 arrière de manière que la face arrière 290 de la tête de l'ergot 86 puisse venir au contact de la face avant 88 du flasque 52 et également que l'ergot 86 puisse se déployer et se rétracter radialement.

En variante la face d'extrémité avant de la tête 90 est faiblement en retrait vers l'arrière par rapport à la face d'extrémité avant de la bague 186

Ainsi, le porte-cible 22 est immobilisé axialement par rapport au reste du rotor 14. On notera qu'un léger jeu radial existe entre la périphérie externe de la tête et la face 133 du chambrage 233.

Bien entendu pour éviter tout mouvement on peut procéder à un collage, par exemple par points, de la bague sur le flasque 52 du ventilateur.

En variante la face d'extrémité avant de la bague 186 est munie de moyens élastiques à action axiale, tels qu'un anneau en élastomère ou une rondelle élastique ondulée. Ces moyens sont comprimés lors du montage de la bague et ensuite se détendent et restent précontraints au contact de la face 33 du dégagement en sorte que la face arrière 290 de la tête reste en contact de compression avec le bord 88.

Aucun jeu axial n'est alors présent.
Selon une variante non représentée de l'invention, les ergots 86 de fixation peuvent être réalisés en une pièce venue de matière avec le voile 84 du porte-cible 22. Par exemple, les ergots 86 à tête d'accrochage sont réalisés par pliage de languettes de tôle qui s'étendent, avant pliage, radialement vers l'intérieur depuis l'alésage intérieur 80 du porte-cible 22.
Ensuite les languettes sont relevées pour s'étendre axialement. Cette disposition est avantageuse car on tire partie de la chute de matière nécessaire pour former l'alésage 80. C'est dans cette chute de matière que sont formées les languettes.

Lors du montage, le porte-cible 22 est agencé coaxialement et axialement en arrière du ventilateur arrière 50 de manière que les ergots 86 soient en coïncidence avec les crans 94 du ventilateur arrière 50.

Puis, comme dans les figures 2 à 5, le porte-cible 22 est déplacé axialement vers l'avant en direction du ventilateur arrière 50 de manière que les ergots 86 fléchissent élastiquement radialement vers l'intérieur lorsque la rampe 190 de la tête 90 glisse sur le bord supérieur 194 en sorte que la face 290 viennent ensuite en prise avec le bord d'accrochage 88 associé de l'alésage intérieur 54 constitué par la face avant du bord supérieur 194 du flasque 52.

Lorsque la tête 90 des ergots 86 est passée axialement à travers les crans 94 en avant du flasque 52, les ergots 86 sont rappelés élastiquement radialement vers l'extérieur dans leur état de repos, comme dans les figures 2 à 5, de manière que la tête 90 des ergots 86 soit en vis-à-vis de la face avant du flasque 52 du ventilateur arrière 50 en bloquant ainsi le déplacement axial vers l'arrière du porte-cible 22.

Les ergots 86 sont alors bloqués dans les crans 94 du ventilateur arrière 50 permettant ainsi la fixation et le centrage du porte-cible 22 sur le ventilateur arrière 50 en une seule opération de montage. La fixation du porte-cible 22 sur le ventilateur est donc effectuée dans tous les cas par encliquetage.

Bien entendu on peut inverser les structures en sorte que les crans du flasque 52 sont remplacés par des doigts de fixation appartenant au flasque 52 et constituant les deuxièmes moyens de fixation 88.

Ainsi selon un deuxième mode de réalisation de l'invention qui est représenté aux figures 6 et 7, la bague 186 en matière plastique est munie des premiers moyens 86 de fixation du porte-cible 22, qui comportent au moins une pince 86 comprenant une encoche 100 axiale borgne périphérique, qui débouche axialement vers la face avant de la bague 186 et radialement vers l'extérieur. L'encoche 100 est délimitée par deux parois latérales 102 radiales axiales en vis-à-vis qui sont susceptibles d'être écartées élastiquement l'une de l'autre pour recevoir axialement un doigt de fixation 88 du ventilateur arrière 50. Le doigt de fixation 88 est ainsi emprisonné dans l'encoche 100 lorsque les parois latérales 102 sont rappelées élastiquement l'une vers l'autre.

Dans l'exemple représenté à la figure 6, le porte-cible 22 comporte quatre pinces 86 et donc quatre encoches 100 qui sont agencés régulièrement autour du porte-cible 22.

Comme représenté à la figure 7, le ventilateur arrière 50 comporte quatre doigts de fixation 88 correspondants aux encoches 100, qui s'étendent radialement vers l'intérieur depuis son alésage intérieur 54 et qui sont agencés en coïncidence avec les encoches 100.

Les doigts 88 sont obtenus de manière économique car ils sont obtenus à partir de la chute de matière résultant de la formation de l'alésage interne 54 du flasque 52.

Chaque encoche 100 ne traverse pas totalement axialement la bague 186 de manière que la pince 86 soit réalisée en une seule pièce. Chaque encoche débouche à l'arrière dans un logement 106 de réception du doigt 88 concerné
La bague 186 est donc fendue à l'avant par quatre encoches 100 associées chacune à un logement 106.

On notera que le voile 84 (figure 6) est prolongé à sa périphérie interne par une portion décalée axialement vers l'arrière. La bague 186, solidaire du porte-cible 22, est également surmoulée en 98 dans cette portion centrale en étant au contact de la face avant du voile 84.

Cette disposition permet de fragmenter, en variante, la bague 186 en plusieurs secteurs annulaires cylindriques.

Plus précisément chaque secteur est délimité par une fente axiale et radiale, dont l'une est visible en pointillés en 104 à la figure 6. Cette fente s'étend axialement vers l'avant à partir du voile 84 et débouche à l'avant centralement dans le logement 106 implanté à l'arrière de l'encoche 100. Ce logement 106 est plus large circonférentiellement que l'encoche 100.

Cette disposition permet d'écarter circonférentiellement plus facilement les parois 102.

La bague 186 présente à sa périphérie externe une face cylindrique externe 110 sensiblement égale au diamètre de l'alésage intérieur 54 du ventilateur arrière 50. Ainsi la périphérie externe de la bague 186 est en contact intime avec la périphérie interne de l'alésage 54.

On obtient ainsi un bon centrage de la bague 186, éventuellement fractionnées, par rapport au ventilateur 50 et donc une bonne coaxialité de la cible 20 par rapport au ventilateur 50 centré par rapport à l'arbre 12.

Bien entendu la bague 186 pénètre dans le dégagement en forme de chambrage de la roue polaire et n'interfère par avec le collecteur 74 comme dans les figures 1 à 5.

Les parois latérales 102 des encoches 100 sont parallèles entre elles.

La largeur circonférentielle des encoches 100 dans un état de repos est inférieure à la largeur circonférentielle du doigt de fixation 88 associé de manière que les parois latérales 102 soient écartés circonférentiellement élastiquement l'une de l'autre lors de l'insertion axiale du doigt de fixation 88 dans l'encoche 100 pour réaliser l'emboîtement élastique.

En variante, pour faciliter le montage, les parois latérales 102 sont convergentes axialement vers l'arrière de manière à être légèrement plus écartées à l'extrémité arrière de l'encoche 100 qu'à l'extrémité avant. Ainsi, à l'extrémité arrière de l'encoche 100, les parois latérales 102 sont écartées d'une distance circonférentielle qui est plus grande que la largeur circonférentielle du doigt de fixation 88 associé, tandis que leur extrémité avant est inférieure à la largeur circonférentielle du doigt de fixation 88 associé.

Les parois latérales 102 en vis-à-vis de l'encoche 100 comportent une pluralité de rainures radiales qui sont destinées à agripper le doigt de fixation 88 associé du ventilateur arrière 50 pour résister à un retrait axialement vers l'avant. Les rainures ont avantageusement un profil axial en dents de scie pour améliorer le blocage axial du porte-cible 22 par rapport au ventilateur arrière 50.

L'extrémité arrière de chaque encoche 100 débouche de manière précitée dans un logement 106 arrière formé dans la bague 186. Le logement 106 arrière présente une largeur circonférentielle sensiblement égale à celle du doigt de fixation 88 associé du ventilateur arrière 50 en permettant aux parois latérales 102 de revenir élastiquement dans leur position de repos. Le doigt de fixation 88 est ainsi emprisonné axialement dans le logement 106.

Le doigt de fixation 88 est aussi bloqué circonférentiellement par des parois latérales (non référencées) du logement 106, permettant ainsi de lier en rotation le porte-cible 22 avec le ventilateur arrière 50.

Selon une variante non représentée de ce deuxième mode de réalisation de l'invention, la face cylindrique extérieure 110 de la bague 186 est conformée en un secteur tronconique présentant une pente montant radialement vers l'extérieur depuis l'extrémité avant de manière à faciliter le montage du porte-cible 22 sur le ventilateur arrière 50. Ainsi, l'extrémité avant de la bague 186, éventuellement fragmentée en secteurs annulaires, est agencée sur un diamètre inférieur à celui de l'alésage intérieur 54 du ventilateur arrière 50, tandis que le diamètre du secteur de la bague 186 au niveau du logement 106 arrière de l'encoche 100 est sensiblement égal au diamètre de l'alésage intérieur 54 du ventilateur arrière 50.

Lors du montage, le porte-cible 22 est agencé coaxialement et axialement en arrière du ventilateur arrière 50 de manière que les encoches 100 soient en coïncidence avec les doigts de fixation 88.

Puis le porte-cible 22 est déplacé axialement vers l'avant de manière que les doigts de fixation 88 écartent circonférentiellement et élastiquement les parois latérales 102 des encoches 100 l'une de l'autre.

Lorsque le doigt de fixation 88 est reçu dans le logement 106 arrière, les parois latérales 102 sont rappelées élastiquement dans leur état de repos en bloquant le déplacement axial vers l'avant du doigt de fixation 88. Le doigt de fixation 88 est ainsi emprisonné dans le logement 106 arrière. Le porte-cible 22 est ainsi centré et fixé sur le ventilateur arrière 50 en une unique opération de montage. La fixation est donc réalisée par encliquetage comme dans le premier mode de réalisation.

Dans tous les cas le nombre de doigts 88 et de crans 94 dépend des applications et peut être différent de quatre.

Bien entendu la présente invention n'est pas limitée aux exemples de réalisation décrits.

Ainsi la bague 186 est en variante renforcée par des fibres, telles que des fibres de verre.

Le corps de la bague 186 peut comporter en saillie radiale plusieurs portées de centrage coopérant avec la face interne de l'alésage 54. Un jeu radial peut donc exister entre le corps de la bague 186 et l'alésage interne 54.

Par exemple ces saillies, de manière précitée, sont montées dans des crans supplémentaires et servent à bloquer en rotation le porte-cible par rapport au ventilateur et également à centrer le porte-cible par rapport au ventilateur.

En variante que le porte-cible est centré sur le ventilateur par contact radial entre l'ergot et le bord d'accrochage 194 de l'orifice 94 associé.

On peut combiner les deux modes de réalisation. Par exemple le flasque 52 peut comporter deux doigts 88 et deux crans 94, tandis que la bague 186 comporte respectivement deux encoches 100 et deux ergots 86 complémentaires.

Dans les figures 6 et 7 l'alésage 54 est en variante munie d'au moins deux crans pour réception de saillies de forme complémentaire aux crans afin de bloquer en rotation la bague 186 et ménager les doigts 88.

L'alésage interne 54 des figures 6 et 7 peur comporter une collerette comme dans les figures 1 à 5. Cette collerette est alors interrompue par les doigts 88.

En variante le noyau 34 du rotor à griffes 14 est distinct des flasques 28 des roues polaires.

Des aimants permanents sont en variante montés entre au moins certaines griffes 30.

Le rotor en variante comporter deux rotors à griffes échelonnés axialement le long de l'arbre 12. La face avant du premier rotor porte le ventilateur avant, tandis que la face arrière du deuxième rotor porte le ventilateur arrière.

Le stator 16 est dans ce cas en une seule partie ou en variante en deux parties, chaque partie étant associé à l'un des rotors à griffes.

Le rotor est en variante un rotor à pôles saillants.

Ce rotor dans un mode de réalisation comporte une alternance de pôles saillants et d'aimants permanents.

Le carter 36 peut comporter plus de deux parties. Par exemple il comporte un palier avant, un palier arrière et une partie intermédiaire portant intérieurement le stator.

Le palier arrière de l'alterno-démarreur peut porter également des composants électroniques de puissance. Ces composants appartiennent par exemple à plusieurs modules montés par exemple sur une mezzanine implantée au dessus du palier arrière comme décrit dans le document WO 2004/040738.

On peut inverser les structures comme décrit dans le document WO-A- 01/69.762 précité. Ainsi le ventilateur avant est en variante équipé du porte-cible.22.

L'un des paliers 38, 40 est en variante refroidi par une circulation de liquide en sorte que l'un des ventilateurs 48, 50 est supprimé, l'autre étant équipé du porte-cible.

Dans tous les cas on peut standardiser le ventilateur concerné, celui-ci pouvant être équipé ou non du porte-cible.

Un même ventilateur peut donc être fixé sur un rotor appartenant à un alternateur ou à un alterno-démarreur.

Ce ventilateur peut être avantageusement entièrement métallique pour mieux évacuer la chaleur. En variante il est en une autre matière. En variante une première partie des pales provient du flasque métallique du ventilateur et l'autre partie des pales est en matière plastique surmoulée sur la première partie. Les pales du ventilateur peuvent être de forme quelconque.

Par exemple elles peuvent être inclinées axialement.

D'une manière générale le ventilateur peut être à action axiale, du type centrifuge ou du type centripète.

Dans les modes de réalisations décrits on peut inverser les structures. Ainsi en variante la bague 186 à ergots ou encoches est solidaire du ventilateur, tandis que respectivement les crans 94 et les doigts 88 appartiennent au porte-cible 22.

Ainsi l'un des éléments porte-cible - ventilateur, dit premier élément, comporte des premiers moyens de fixation par emboîtement élastique qui sont destinés à être emboîtés élastiquement avec des deuxièmes moyens de fixation de forme complémentaire portés par l'autre des éléments ventilateurs - porte-cible, dit deuxième élément, pour la fixation du porte-cible sur le ventilateur et dans lequel le porte-cible est monté sur le ventilateur par emboîtement axial des premiers moyens de fixation avec les seconds moyens de fixation.

L'emboîtement élastique est réalisé au niveau de la périphérie interne du ventilateur, c'est-à-dire en dehors des pales du ventilateur, qui ainsi sont ménagées.

On ne modifie pas de manière profonde le ventilateur concerné, les pales étant inchangées. Seule la périphérie interne du ventilateur est aménagée.

Le ventilateur peut être de faible épaisseur comme dans l'art antérieur en étant métallique.

On peut assembler la cible au porte-cible dans un endroit distinct de celui de l'assemblage du ventilateur au rotor

On diminue les risques de chocs sur la ligne d'assemblage car le porte- cible peut être équilibré par avance en rotation pour éliminer les balourds dus aux phénomènes de force centrifuge et être monté après l'équilibrage en rotation de l'ensemble rotor ventilateur.

Grâce à l'invention on obtient une bonne concentricité de la cible par rapport au ventilateur centré sur l'arbre et donc par rapport à l'arbre.

La solution selon l'invention n'est pas fonction du collecteur 74 utilisé; la bague 186 n'interférant pas avec le collecteur.

L'invention est applicable également à un ventilateur double, c'est-à-dire comportant deux ventilateurs superposés pour augmenter le nombre de pales comme décrit par exemple dans le document WO 2004/106748. Dans ce cas le porte cible est par exemple fixé sur le ventilateur supérieur à collerette de la figure 2 de ce document. On tire alors partie de cette collerette pour fixer le porte-cible, par exemple comme dans le mode de réalisation des figures 2 à 5 de la présente invention.

.Bien entendu le nombre de ventilateurs superposés est en variante supérieur à deux.

Dans ces documents on voit également les plots de soudage pour fixer de manière précitée le ventilateur par soudage sur le rotor.

La lecture de la cible est en variante axiale, comme mentionné dans le document WO-A- 01/69.762.

En variante la cible 20 n'est pas magnétique ; les moyens de suivi 18 étant en variante à lecture optique ou autre comme mentionné dans le document WO-A- 01/69.762.

## Revendications

1. Machine électrique tournante (10), telle qu'un alterno-démarreur notamment pour un véhicule automobile, tournante, comportant :
- un porte cible (22) portant une cible (20) ;
- un carter (38, 40) ;
- un arbre central (12) présentant un axe (B) ;
- un rotor (14) solidaire de l'arbre (12) monté rotatif dans le carter (38, 40) autour de son axe (B) ;
- au moins un ventilateur (48, 50) solidaire du rotor (14) et présentant un flasque (52) muni d'un alésage interne (54) de passage de l'arbre (12) et équipé à sa périphérie extérieure de pales (56), ledit alésage interne (54) appartenant à la périphérie interne du ventilateur (48, 50);
- au moins un capteur (78) porté par le carter (38, 40) et associé à la cible (20) pour déterminer la position angulaire du rotor (14), dans lequel le porte-cible (22) est distinct et solidaire du ventilateur (48,52) interposé axialement entre le porte-cible (22) et le rotor (14), **caractérisée en ce que** l'un des éléments porte-cible (22)-ventilateur (48,50), dit premier élément, comporte des premiers moyens (86) de fixation par emboîtement élastique, qui sont destinés à être emboîtés élastiquement avec des deuxièmes moyens (88) de fixation de formes complémentaires portés par l'autre des éléments ventilateur (48, 50)- porte-cible (22), dit deuxième élément, pour la fixation du porte-cible (22) à la périphérie interne du ventilateur par emboîtement élastique des premiers moyens de fixation (86) avec les second moyens de fixation (88) au niveau de la périphérie interne du ventilateur (48, 50) en dehors des pales (56) du ventilateur (48, 52) et **en ce qu'**un centrage du porte-cible (22) de manière coaxiale par rapport au ventilateur (50) et à l'arbre (12) est réalisé par les premiers (86) et deuxièmes moyens (88) de fixation.

2. Machine selon la revendication 1, **caractérisée en ce que** les premiers moyens (86) de fixation comportent au moins un ergot (86) qui s'étend axialement depuis le premier élément (22-48, 50) et présente une tête (90) en forme de crochet tourné radialement vers l'extérieur et qui est susceptible d'être déformé élastiquement radialement vers l'intérieur pour le montage du premier élément (22- 48, 50) en accrochant un bord d'accrochage (88) radialement extérieur d'un orifice (94) associé du deuxième élément (48, 50-22) formant les deuxièmes moyens de fixation.

3. Machine selon la revendication 2, **caractérisée en ce que** le premier élément est le porte-cible (22), **en ce que** l'ergot (86) s'étend axialement vers l'avant depuis le porte-cible (22) et **en ce que** la tête (90) de l'ergot (86) présente une face d'extrémité avant (190) en forme de rampe inclinée vers l'intérieur en parcourant la tête (90) d'arrière en avant.

4. Machine selon la revendication 2 ou 3, **caractérisée en ce que** le deuxième élément est le ventilateur (50) et **en ce que** le bord d'accrochage (88) est un bord radialement extérieur (194) de l'orifice (94) associé du flasque (52) du ventilateur (50).

5. Machine selon la revendication 4, **caractérisée en ce que** l'orifice (94) est constitué par un cran (94) débouchant dans l'alésage interne (54) du flasque (52) du ventilateur (50), **en ce que** le cran (94) est délimité par deux bords radiaux (294), **en ce que** l'ergot (86) présente un corps d'orientation axiale relié à sa tête et **en ce que** les bords radiaux (294) sont destinés à coopérer avec les bords latéraux du corps de l'ergot pour blocage en rotation par coopération de formes.

6. Machine selon la revendication 5, **caractérisée en ce que** le porte-cible (22) est centré sur le ventilateur (48, 50) par contact radial entre l'ergot (86) et le bord radialement extérieur (194) de l'orifice (94) associé.

7. Machine selon l'une quelconque des revendications précédentes, **caractérisée en ce que** les premiers moyens (86) de fixation comportent au moins une pince (86) comportant une encoche (100) axiale qui débouche axialement vers l'avant ou l'arrière, et qui est délimitée par deux parois latérales (102) en vis-à-vis qui sont susceptibles d'être écartées élastiquement l'une de l'autre pour recevoir axialement un doigt (88) de fixation appartenant aux deuxièmes moyens de fixation (88), le doigt (88) de fixation étant bloqué axialement dans la pince (86) lorsque les parois son rappelées élastiquement l'une vers l'autre.

8. Machine selon la revendication 7, **caractérisée en ce que** le doigt (88) de fixation appartient au ventilateur (50) et s'étend radialement vers l'intérieur depuis l'alésage interne (54) du ventilateur (50).

9. Machine selon la revendication 7 ou 8, **caractérisée en ce que** la largeur circonférentielle d'une encoche (100) avant insertion du doigt (88) de fixation est inférieure à la largeur circonférentielle du doigt de fixation (88).

10. Machine selon la revendication 8 ou 9, **caractérisée en ce que** le porte-cible (22) est centré sur le ventilateur (48, 50) par contact radialement extérieur de la pince (86) et le bord interne (188) de l'alésage interne (54) du flasque (52) du ventilateur (48, 50).

11. Machine selon l'une quelconque des revendications précédentes, **caractérisée en ce que** le premier élément (22-48, 50) comporte une bague d'orientation axiale en matière plastique et **en ce que** les premiers moyens (86) de fixation sont solidaires de la bague (186) en matériau plastique.

12. Machine selon la revendication 11, **caractérisée en ce que** le rotor (14) comprend une roue polaire (24) sur laquelle est fixé le flasque (52) à alésage interne (54) du ventilateur (50), **en ce que** la roue polaire (24) présente à sa périphérie interne un dégagement de matière en forme de chambrage (233) et **en ce que** l'extrémité avant de la bague (186) pénètre dans le chambrage (233).

13. Machine selon la revendication 12, **caractérisée en ce que** la périphérie externe (96, 110) de la bague (186) est en contact intime avec le bord intérieur (188) de l'alésage interne (54) du flasque (52) du ventilateur (48, 50) délimité par un rebord annulaire d'orientation axial (154) prolongé par une portion courbe (254) raccordant le rebord (154) à la périphérie interne du flasque (52) d'orientation radiale.

14. Machine selon l'une quelconque des revendications 11 à 13, **caractérisée en ce que** le porte- cible (22) comporte un voile radial (84) métallique et **en ce que** la bague (186) est surmoulée ou collée sur le voile (84).

15. Machine selon l'une quelconque des revendications précédentes, **caractérisée en ce que** la cible (20) est magnétique, **en ce que** le porte-cible (22) comporte un anneau radial (84) entourant l'arbre (12) et à sa périphérie externe une jupe de montage de la cible (20) s'étendant axialement en direction opposée au rotor (14).

## Patentansprüche

1. Drehende elektrische Maschine (10), wie ein Starter-Generator, insbesondere für ein Kraftfahrzeug, die aufweist:
- einen ein Ziel (20) tragenden Zielträger (22);
- ein Gehäuse (38, 40);
- eine zentrale Welle (12) mit einer Achse (B);
- einen fest mit der Welle (12) verbundenen Rotor (14), der im Gehäuse (38, 40) um seine Achse (B) drehend montiert ist;
- mindestens einen fest mit dem Rotor (14) verbundenen und einen mit einer Innenbohrung (54) für den Durchgang der Welle (12) versehenen Flansch (52) aufweisenden und an seinem Außenumfang mit Flügeln (56) ausgestatteten Lüfter (48, 50), wobei die Innenbohrung (54) zum Innenumfang des Lüfters (48, 50) gehört;
- mindestens einen Sensor (78), der vom Gehäuse (38, 40) getragen wird und dem Ziel (20) zugeordnet ist, um die Winkelstellung des Rotors (14) zu bestimmen,
wobei der Zielträger (22) vom Lüfter (48, 50) getrennt und fest mit diesem verbunden ist, der axial zwischen den Zielträger (22) und den Rotor (14) eingeführt ist,
**dadurch gekennzeichnet, dass** eines der Elemente aus Zielträger (22) und Lüfter (48, 50), erstes Element genannt, erste Einrichtungen (86) zur Befestigung durch elastische Steckverbindung aufweist, die dazu bestimmt sind, mit zweiten Befestigungseinrichtungen (88) komplementärer Formen elastisch zusammengesteckt zu werden, die von dem anderen der Elemente aus Lüfter (48, 50) und Zielträger (22), zweites Element genannt, getragen werden, um den Zielträger (22) am Innenumfang des Lüfters durch elastische Steckverbindung der ersten Befestigungseinrichtungen (86) mit den zweiten Befestigungseinrichtungen (88) im Bereich des Innenumfangs des Lüfters (48, 50) außerhalb der Flügel (56) des Lüfters (48, 52) zu befestigen, und dass eine Zentrierung des Zielträgers (22) koaxial zum Lüfter (50) und zur Welle (12) von den ersten (86) und zweiten Befestigungseinrichtungen (88) durchgeführt wird.

2. Maschine nach Anspruch 1, **dadurch gekennzeichnet, dass** die ersten Befestigungseinrichtungen (86) mindestens einen Zapfen (86) aufweisen, der sich axial vom ersten Element (22 - 48, 50) erstreckt und einen Kopf (90) in Form eines radial nach außen weisenden Hakens aufweist, und der für die Montage des ersten Elements (22 - 48, 50) radial elastisch nach innen verformt werden kann, indem ein radial äußerer Einhakrand (88) einer zugeordneten Öffnung (94) des die zweiten Befestigungseinrichtungen bildenden zweiten Elements (48, 50 - 22) eingehakt wird.

3. Maschine nach Anspruch 2, **dadurch gekennzeichnet, dass** das erste Element der Zielträger (22) ist, dass der Zapfen (86) sich axial nach vorne ausgehend vom Zielträger (22) erstreckt, und dass der Kopf (90) des Zapfens (86) eine vordere Endseite (190) in Form einer von der Vorder- zur Rückseite des Kopfs (90) nach innen geneigten Rampe aufweist.

4. Maschine nach Anspruch 2 oder 3, **dadurch gekennzeichnet, dass** das zweite Element der Lüfter (50) ist, und dass der Einhakrand (88) ein radial äußerer Rand (194) der zugeordneten Öffnung (94) des Flanschs (52) des Lüfters (50) ist.

5. Maschine nach Anspruch 4, **dadurch gekennzeichnet, dass** die Öffnung (94) aus einer in die Innenbohrung (54) des Flanschs (52) des Lüfters (50) mündenden Kerbe (94) besteht, dass die Kerbe (94) von zwei radialen Rändern (294) begrenzt wird, dass der Zapfen (86) einen Körper mit axialer Ausrichtung aufweist, der mit seinem Kopf verbunden ist, und dass die radialen Ränder (294) dazu bestimmt sind, mit den seitlichen Rändern des Körpers des Zapfens zur Drehblockierung durch Formzusammenwirkung zusammenzuwirken.

6. Maschine nach Anspruch 5, **dadurch gekennzeichnet, dass** der Zielträger (22) auf dem Lüfter (48, 50) durch radialen Kontakt zwischen dem Zapfen (86) und dem radial äußeren Rand (194) der zugeordneten Öffnung (94) zentriert wird.

7. Maschine nach einem der vorhergehenden Ansprüche, **dadurch gekennzeichnet, dass** die ersten Befestigungseinrichtungen (86) mindestens eine Klammer (86) aufweisen, die eine axiale Aussparung (100) aufweist, die axial nach vorne oder nach hinten mündet, und die von zwei einander gegenüberliegenden Seitenwänden (102) begrenzt wird, die elastisch voneinander entfernt werden können, um axial einen Befestigungsfinger (88) aufzunehmen, der zu den zweiten Befestigungseinrichtungen (88) gehört, wobei der Befestigungsfinger (88) axial in der Klammer (86) blockiert wird, wenn die Wände elastisch zueinander gezogen werden.

8. Maschine nach Anspruch 7, **dadurch gekennzeichnet, dass** der Befestigungsfinger (88) zum Lüfter (50) gehört und sich von der Innenbohrung (54) des Lüfters (50) radial nach innen erstreckt.

9. Maschine nach Anspruch 7 oder 8, **dadurch gekennzeichnet, dass** die Umfangsbreite einer Aussparung (100) vor der Einführung des Befestigungsfingers (88) kleiner ist als die Umfangsbreite des Befestigungsfingers (88).

10. Maschine nach Anspruch 8 oder 9, **dadurch gekennzeichnet, dass** der Zielträger (22) durch radial äußeren Kontakt der Klammer (86) und des Innenrands (188) der Innenbohrung (54) des Flanschs (52) des Lüfters (48, 50) auf den Lüfter (48, 50) zentriert wird.

11. Maschine nach einem der vorhergehenden Ansprüche, **dadurch gekennzeichnet, dass** das erste Element (22 - 48, 50) einen Kunststoffring axialer Ausrichtung aufweist, und dass die ersten Befestigungseinrichtungen (86) fest mit dem Kunststoffring (186) verbunden sind.

12. Maschine nach Anspruch 11, **dadurch gekennzeichnet, dass** der Rotor (14) ein Polrad (24) enthält, an dem der Flansch (52) mit Innenbohrung (54) des Lüfters (50) befestigt ist, dass das Polrad (24) an seinem Innenumfang einen Materialabsatz in Form einer Einsenkung (233) aufweist, und dass das vordere Ende des Rings (186) in die Einsenkung eindringt (233).

13. Maschine nach Anspruch 12, **dadurch gekennzeichnet, dass** der Außenumfang (96, 110) des Rings (186) in engem Kontakt mit dem Innenrand (188) der Innenbohrung (54) des Flanschs (52) des Lüfters (48, 50) steht, der von einer ringförmigen Randleiste axialer Ausrichtung (154) verlängert durch einen gekrümmten Abschnitt (254) begrenzt wird, der die Randleiste (154) an den Innenumfang des Flanschs (52) radialer Ausrichtung anschließt.

14. Maschine nach einem der Ansprüche 11 bis 13, **dadurch gekennzeichnet, dass** der Zielträger (22) eine metallische radiale Abdeckung (84) aufweist, und dass der Ring (186) auf die Abdeckung (84) aufgeformt oder geklebt ist.

15. Maschine nach einem der vorhergehenden Ansprüche, **dadurch gekennzeichnet, dass** das Ziel (20) magnetisch ist, dass der Zielträger (22) einen die Welle (12) umgebenden radialen Ring (84) und an seinem Außenumfang eine Schürze zur Montage des Ziels (20) aufweist, die sich axial in dem Rotor (14) entgegengesetzter Richtung erstreckt.

## Claims

1. Rotary electric machine (10) such as an alternator-starter notably for a motor vehicle, comprising:
- a target carrier (22) bearing a target (20);
- a casing (38, 40);
- a central shaft (12) having an axis (B);
- a rotor (14) secured to the shaft (12), mounted to rotate in the casing (38, 40) about its axis (B);
- at least one fan (48, 50) secured to the rotor (14) and having a disc (52) provided with an internal bore (54) for the passage of the shaft (12) and equipped at its external periphery with blades (56), the said internal bore (54) belonging to the internal periphery of the fan (48, 50);
- at least one sensor (78) borne by the casing (38, 40) and associated with the target (20) so as to determine the angular position of the rotor (14),
in which the target carrier (22) is distinct from and secured to the fan (48, 50) interposed axially between the target carrier (22) and the rotor (14),
**characterized in that** of the elements that are the target carrier (22) and the fan (48, 50), one, referred to as the first element, comprises first means (86) of attachment by elastic fitting-together, which means are intended to be fitted elastically together with second means (88) of attachment of complementary shapes borne by the other of the elements that are the fan (48, 50) and the target carrier (22) and referred to as the second element, for attaching the target carrier (22) to the internal periphery of the fan by elastically fitting the first means of attachment (86) together with the second means of attachment (88) at the internal periphery of the fan (48, 50) away from the blades (56) of the fan (48, 52) and **in that** the target carrier (22) is centred coaxially with respect to the fan (50) and to the shaft (12) by the first (86) and second (88) means of attachment.

2. Machine according to Claim 1, **characterized in that** the first means (86) of attachment comprise at least one lug (86) which extends axially from the first element (22-48, 50) and has a head (90) in the shape of a hook facing radially outwards and which is capable of being elastically deformed radially inwards for mounting the first element (22-48, 50) by catching a radially outer catching edge (88) of an associated orifice (94) of the second element (48, 50-22) forming the second means of attachment.

3. Machine according to Claim 2, **characterized in that** the first element is the target carrier (22), **in that** the lug (86) extends axially forwards from the target carrier (22) and **in that** the head (90) of the lug (86) has a front end face (190) in the form of a ramp inclined inwards when passing along the head (90) from the rear forward.

4. Machine according to Claim 2 or 3, **characterized in that** the second element is the fan (50) and **in that** the catching edge (88) is a radially external edge (194) of the associated orifice (94) of the disc (52) of the fan (50).

5. Machine according to Claim 4, **characterized in that** the orifice (94) consists of a cutout (94) opening into the internal bore (54) of the disc (52) of the fan (50), **in that** the cutout (94) is delimited by two radial edges (294), **in that** the lug (86) has an axially oriented body connected to its head and **in that** the radial edges (294) are intended to collaborate with the lateral edges of the body of the lug for preventing rotation through collaboration of shapes.

6. Machine according to Claim 5, **characterized in that** the target carrier (22) is centred on the fan (48, 50) by radial contact between the lug (86) and the radially external edge (194) of the associated orifice (94).

7. Machine according to any one of the preceding claims, **characterized in that** the first means (86) of attachment comprise at least one clip (86) comprising an axial notch (100) which opens axially towards the front or towards the rear and which is delimited by two opposing lateral walls (102) which can be parted elastically from one another in order axially to accept an attachment finger (88) belonging to the second means (88) of attachment, the attachment finger (88) being immobilized axially in the clip (86) as the walls are returned elastically towards one another.

8. Machine according to Claim 7, **characterized in that** the attachment finger (88) belongs to the fan (50) and extends radially inwards from the internal bore (54) of the fan (50).

9. Machine according to Claim 7 or 8, **characterized in that** the circumferential width of a notch (100) prior to insertion of the attachment finger (88) is less than the circumferential width of the attachment finger (88).

10. Machine according to Claim 8 or 9, **characterized in that** the target carrier (22) is centred on the fan (48, 50) by radially external contact between the clip (86) and the internal edge (188) of the internal bore (54) of the disc (52) of the fan (48, 50).

11. Machine according to any one of the preceding claims, **characterized in that** the first element (22-48, 50) comprises an axially oriented ring made of plastic and **in that** the first means (86) of attachment are secured to the plastic ring (186).

12. Machine according to Claim 11, **characterized in that** the rotor (14) comprises a pole wheel (24) to which the disc (54) with internal bore (54) of the fan (50) is attached, **in that** the pole wheel (24) at its internal periphery has an absence of material in the form of a recess (233) and **in that** the front end of the ring (186) enters the recess (233).

13. Machine according to Claim 12, **characterized in that** the external periphery (96, 110) of the ring (186) is in close contact with the internal edge (188) of the internal bore (54) of the disc (52) of the fan (48, 50) which is delimited by an axially oriented annular rim (154) extended by a curved portion (254) connecting the rim (154) to the internal periphery of the radially oriented disc (52).

14. Machine according to any one of Claims 11 to 13, **characterized in that** the target carrier (22) comprises a metal radial web (84) and **in that** the ring (186) is overmoulded onto or bonded to the web (84).

15. Machine according to any one of the preceding claims, **characterized in that** the target (20) is magnetic, **in that** the target carrier (22) comprises a radial annulus (84) surrounding the shaft (12) and at its external periphery a skirt for the mounting of the target (20) extending axially away from the rotor (14).
